Europäisches Patentamt

(19) European Patent Office

Office européen des brevets

(11) Numéro de publication: **0 254 645**
**B1**

(12) **FASCICULE DE BREVET EUROPEEN**

(45) Date de publication du fascicule du brevet:
**28.11.90**

(21) Numéro de dépôt: **87401707.2**

(22) Date de dépôt: **22.07.87**

(51) Int. Cl.⁵: **B62D 6/02**, B62D 5/06

(54) Dispositif de direction assistée pour véhicules automobiles, du type comprenant une valve de direction assistée.

(30) Priorité: **25.07.86 FR 8610851**

(43) Date de publication de la demande:
**27.01.88 Bulletin 88/4**

(45) Mention de la délivrance du brevet:
**28.11.90 Bulletin 90/48**

(84) Etats contractants désignés:
**DE GB IT**

(56) Documents cités:
**DE-A- 1 816 997**
**FR-A- 2 216 162**
**FR-A- 2 365 472**
**FR-A- 2 575 989**
**US-A- 4 481 866**
**US-A- 4 583 610**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Lescaut, Emmanuel, 18 rue des Cols Verts, F-78340 Les Clayes Sous Bois(FR)**

(74) Mandataire: **Durand, Yves Armand Louis et al, Cabinet Z. Weinstein 20, Avenue de Friedland, F-75008 Paris(FR)**

## Description

L' invention concerne un dispositif de direction assistée pour véhicules automobiles du type décrit dans le préambule de la revendication principale.

Ce dispositif de direction assistée connu comporte une valve de direction assistée "classique", c'est-à-dire une barre de liaison qui s'étend dans l'axe de la valve à l'intérieur de celle-ci. Pour faire varier le degré d'assistance de la valve de direction, on fait varier le débit ou la pression du fluide s'écoulant dans les circuits de la valve.

Or, ces mesures pour faire varier le degré d'assistance présentent des inconvénients. Ainsi, la baisse du débit peut entraîner une certaine paresse et une lourdeur de direction et un certain flou entre l'angle du volant et l'angle des roues. En conséquence, la variation du débit est limitée et la variation d'assistance l'est aussi. La variation du degré d'assistance par variation de la pression se heurte aux difficultés de faire varier la pression de façon précise et stable en fonction de la vitesse et un flou entre l'angle du volant et l'angle des roues peut s'instaurer.

Par le brevet US N° 4 583 610, il est connu un dispositif de direction assistée qui permet une variation de la flexibilité. Dans ce dispositif, la valve ne comporte plus la barre de torsion classique, c'est-à-dire à l'intérieur de celle-ci, mais une barre de liaison située à l'extérieur de la valve.

Or, ce dispositif de valve assistée a pour inconvénient d'imposer une modification de la structure autour de l'organe de commande du mécanisme de direction, par rapport à un dispositif de direction assistée à valve de direction classique .

La présente invention a pour but de proposer un dispositif de direction assistée, qui permet une variation de la flexibilité sans qu'il soit nécessaire de modifier la structure classique de la valve et ainsi l'architecture du véhicule.

Ce but est atteint grâce aux caractéristiques énoncées dans la partie caractéristique de la revendication principale.

Des caractéristiques avantageuses de l'invention sont décrites dans les revendications 2 à 7.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels:

— la figure 1 est une vue de coupe axiale d'un dispositif de direction assistée selon la présente invention;

— les figures 2 et 3 montrent, de façon schématiques, un premier type de mode de réalisation du moyen de liaison élastique selon la présente invention;

- les figures 4 et 5 montrent de façon schématique un second type de mode de réalisation du moyen de liaison élastique selon l'invention ; et

- la figure 6 est une vue en perspective d'une réalisation du moyen de liaison élastique représenté de façon schématique à la figure 4.

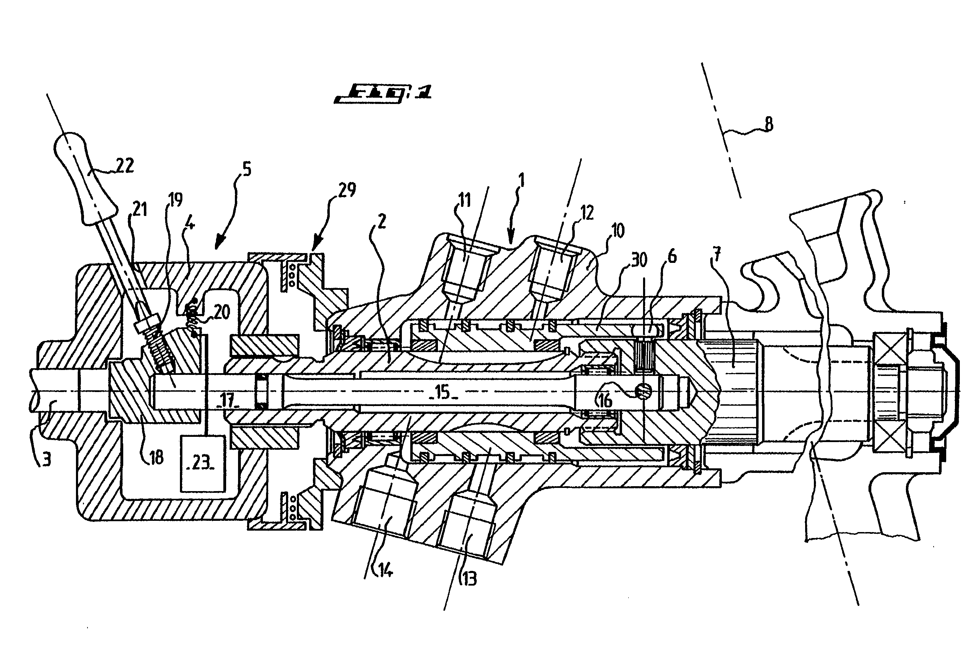

En se reportant à la figure 1, on constate qu'un dispositif de direction assistée comprend essentiellement une valve de direction assistée 1 d'une structure connue en soi, dont le rotor 2 est relié à l'arbre de direction 3 par l'intermédiaire d'un organe formant rotor 4 faisant partie d'un agencement de liaison élastique 5 qui sera décrit de façon détaillée plus loin, et dont le manchon 30 est rendu solidaire en rotation par un pion 6 d'un pignon 7 formant organe de commande mécanique du mécanisme de direction et engrenant à cette fin une crémaillère. L'axe de cette crémaillère est indiqué en 8. La valve 1 comporte en outre un corps 10 formant boîtier. De façon connue en soi, le rotor 2 et le manchon 30 comportent des passages qui constituent deux circuits d'écoulement distincts pour du liquide fourni par une pompe et traversant la valve, chacun de ces circuits étant relié à une des chambres d'un vérin à double effet de la servo-direction. Sur la figure 1, les chiffres de référence 11 et 12 désignent les orifices de travail destinés à être reliés aux chambres du vérin hydraulique non représenté. Les orifices 13 et 14 constituent les orifices respectivement d'arrivée et de retour du fluide mis en circulation par la pompe (non représentée).

Une barre de liaison 15 est reliée à une extrémité par une goupille 16 au pignon 7 et par l'autre extrémité à l'arbre de direction 3 et ainsi au rotor de valve 2 par l'intermédiaire de l'agencement de liaison élastique d'entraînement en rotation 5. On constate que la barre de liaison 15 s'étend dans l'axe de la valve de direction assistée 1 à la manière de la barre de torsion utilisée habituellement dans une telle valve.

Dans le cas de l'invention, l'extrémité 17 opposée à celle solidaire en rotation du pignon 7 ressort du rotor de valve 2. L'agencement de liaison élastique 5 comprend un stator 18 fixé et indexé sur l'extrémité 17 par une vis de calage 19, le rotor susmentionné 4 qui est fixé et indexé sur le rotor de valve 2 et un moyen élastique d'entraînement en rotation schématiquement indiqué en 20 et disposé entre le stator 18 et le rotor 4 de liaison. La vis de calage 19 est accessible de l'extérieur à travers un orifice de calage 21 pour être actionnée à l'aide d'un outil approprié 22. Le chiffre de référence 23 désigne un dispositif de commande permettant de faire varier la flexibilité entre le rotor 4 et le stator 18 de l'agencement de liaison élastique 5.

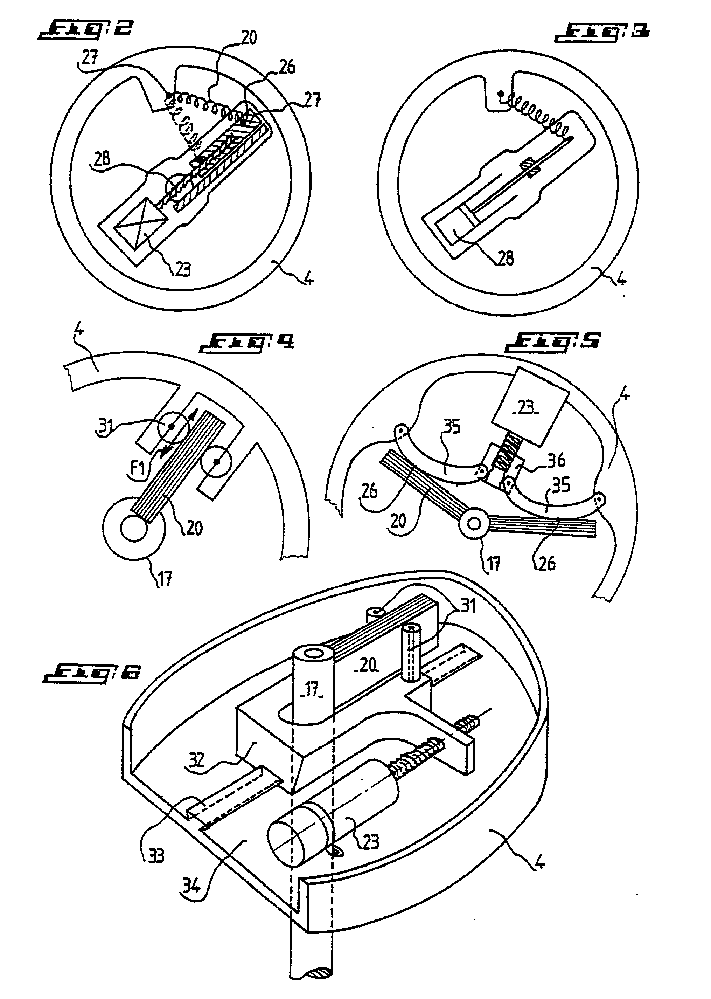

En se référant aux figures 2 à 6 on décrira ci-après plusieurs modes de réalisation du moyen élastique 20 d'entraînement en rotation.

Sur la figure 2, ce moyen 20 est formé par un ou plusieurs ressorts hélicoïdaux interposés entre le rotor 4 et le stator 18. Dans l'exemple représenté, le ressort est ancré en 26 sur un chariot 27 monté radialement mobile sur le stator 18, sous l'effet du dispositif d'entraînement 23. A la figure 2, ce dispositif est formé par un moteur entraînant en rotation une tige filetée 28, tandis que selon la figure 3, le dispositif de commande est constitué par un vérin hydraulique ou un électro-aimant. Bien entendu, tout autre moyen approprié peut être utilisé.

Sur la figure 2, le moyen élastique d'entraînement en rotation 20 et son point d'ancrage 26 sont montrés dans la position de raideur maximale. En traits interrompus on a représenté le moyen élastique 20 dans la position de flexibilité maximale de l'agencement de liaison élastique 5. La position du point d'ancrage 26 peut être rendue dépendante de la vitesse du véhicule. En effet, on peut obtenir une tension, un nombre de chiffres binaires, une pression ou un courant proportonnel à la vitesse, qui sert de critère pour la variation de la position du point d'ancrage 26. Le dispositif d'entraînement 23 peut être alimenté en énergie à l'aide d'un collecteur tournant 29 (figure 1).

Selon les figures 4 et 5, le moyen élastique d'entraînement en rotation 20 est formé par une ou plusieurs lames de flexion. Une extrémité de chaque lame de flexion est rendue solidaire en rotation de l'extrémité 17 de l'arbre de liaison 15. L'autre extrémité est tenue dans le mode de réalisation de la figure 4 par deux galets rotatifs 31 dont les axes sont déplaçables radialement par rapport à la barre de liaison 15 selon la flèche F1. Comme le montre la figure 6, les deux galets 31 associés à une lame de flexion 20 sont montés rotatifs sur un support réalisé sous forme d'un chariot 32 qui coulisse radialement par rapport à l'arbre de liaison 17 sur un rail de guidage 33 en forme de queue d'aronde, qui s'étend radialement sur le fond 34 du rotor 4. Le dispositif d'entraînement 23 du chariot 32 est également monté sur le fond 34 du rotor.

Sur la figure 5, deux lames de flexion sont prévues dont les points d'ancrage 26 sont variables par l'intermédiaire de cames 35 articulées à une extrémité au rotor 4 et à l'autre extrémité à un chariot 36 radialement déplaçable par rapport au stator sous l'effet de la commande 23. Cette commande peut être un moteur, un vérin hydraulique ou un électro-aimant ou encore de toute autre nature appropriée.

On comprend aisément que la variation de la position de l'un des deux points d'ancrage du moyen élastique d'entraînement en rotation 20, par le déplacement radial de ce point, permet d'obtenir une variation de la flexibilité du dispositif de direction assistée selon la présente invention. L'invention présente des avantages importants. Le dispositif selon l'invention permet de faire varier la flexibilité de la barre de torsion d'une valve de direction assistée classique. On sait ainsi réaliser une direction dont l'assistance varie progressivement entre deux limites, l'une pouvant être presque complètement mécanique, l'autre presque complètement assistée. De plus, on peut utiliser une valve proportionnelle hydraulique classique. Il s'intercale en effet entre la valve existante et la colonne de direction. La seule modification de la valve classique consiste en un rallongement et une éventuelle modification du diamètre de la barre de torsion de la valve. Bien entendu, il faut à cet effet supprimer la goupille assurant dans la valve classique la liaison entre le rotor de la valve et la barre de torsion. Un troisième avantage est que le dispositif selon l'invention peut être monté sur un véhicule existant sous forme d'option et ne remet en cause ni l'architecture du véhicule ni la mise au point de la valve et également pas la flexibilité de celle-ci. Il faut bien sûr que le dispositif soit lui même de sécurité et qu'il y ait une butée franche entre le rotor et le stator de l'agencement de liaison élastique en fin de course de l'angle de rotation relatif des deux pièces.

Bien entendu, l'invention ne se limite pas aux modes de réalisation qui ont été décrits.

Ainsi, les joints d'ancrage 26 pouraient ne pas être déplaçables radialement, le chariot 28 étant disposé de façon quelconque. Les lames de flexion 20 pourraient également ne pas être disposées radialement.

**Revendications**

1. Dispositif de direction assistée pour véhicules automobiles, du type comprenant une valve de direction assistée (1) pourvue d'un rotor (2) solidaire en rotation de l'arbre de direction (3), d'un corps fixe formant boîtier (10), d'un manchon tubulaire (30) placé dans le boîtier (10) de façon coaxial autour du rotor (2) et solidaire en rotation d'un organe de commande mécanique (7) du mécanisme de direction et d'un dispositif de liaison élastique d'entraînement en rotation de l'organe de commande (7), qui est interposé entre ce dernier et l'arbre de direction (3) et comporte une barre (15) s'étendant dans l'axe de la valve (1) à l'intérieur de celle-ci en étant solidaire en rotation à une extrémité dudit organe de commande mécanique (7), caractérisé en ce qu'il comprend un agencement de liaison élastique (5) situé à l'extérieur de la valve d'assistance (1), du côté de l'arbre de direction (3), l'agencement de liaison élastique (5) comprenant un organe (18) formant stator fixé sur l'extrémité libre (17) de la barre (15), qui est opposée à celle solidaire en rotation dudit organe de commande mécanique (7) un organe formant rotor (4) fixé sur le rotor (2) de la valve et l'arbre de direction (3) et des moyens de liaison élastique (20) qui sont montés entre lesdits rotor (4) et stator (18) dans un plan radial et ancrés à leurs extrémités respectivement au rotor (4) et au stator (18) et présentent une longueur élastique prédéterminée, et en ce qu'au moins un des points d'ancrage est déplaçable pour permettre une variation de ladite longueur élastique et ainsi de la flexiblité en torsion de la liaison entre la barre de direction (3) et l'organe de commande mécanique (7).

2. Dispositif selon la revendication 1, caractérisé en ce que les moyens de liaison élastique (20) sont formés par un ou plusieurs ressorts hélicoïdaux, le point d'ancrage déplaçable (26) étant prévu sur un support (7) avantageusement radialement mobile sur le stator (18).

3. Dispositif selon la revendication 1, caractérisé en ce que le moyen de liaison élastique (20) est formé par une ou plusieurs lames de flexion montées entre le stator (18) et le rotor de liaison (4), l'ancrage d'une extrémité des lames de flexion étant formé avantageusement par deux galets (31) montés rotatifs sur un support (27, 32) mobile.

4. Dispositif selon la revendication 3, caractérisé en ce que ledit support (32) est un chariot guidé par un rail de guidage (33), avantageusement en forme de queue d'aronde, prévu sur le rotor (4).

5. Dispositif selon l'une des revendications 1 à 4, caractérisé en ce que le déplacement du point d'ancrage ( 26 ) est obtenu par un moyen d'entraînement (23) tel qu'un moteur électrique, vérin hydraulique électro-aimant ou analogue.

6. Dispositif selon la revendication 1, caractérisé en ce que le moyen élastique (20) est formé par une ou plusieurs lames de flexion, dont le point d'ancrage est variable par l'intermédiaire de moyens tels qu'une ou plusieurs cames (35).

7. Dispositif selon l'une des revendications précédentes, caractérisé en ce que l'extrémité (17) de la barre de liaison (15) qui est opposée à l'extrémité solidaire de l'organe de commande mécanique (7) se trouve à l'extérieure la valve (1) et porte le stator (18) de l'agencement de liaison élastique (5).

## Claims

1. Power-assisted steering device for automotive vehicles, of the type comprising a power-assisted steering valve (1) provided with a rotor (2) made rotationally fast with the steering shaft (3), with a stationary body forming a casing (10), with a tubular sleeve (30) placed within the casing (10) in coaxial relationship about the rotor (2) and made rotationally fast with a member (7) for the mechanical operation of the steering mechanism and with an elastic connecting device for the rotary drive of the operating member (7), which is interposed between the latter and the steering shaft (3) and comprises a bar (15) extending along the axis of the valve (1) inside thereof while being made rotationally fast at one end with the said mechanical operating member (7), characterized in that it comprises an elastic connecting arrangement (5) located outside of the assistance valve (1), on the side of towards the steering shaft (3), the elastic connecting arrangement (5) comprising a member (18) forming a stator fastened onto the free end (17) of the bar (15) which is opposite to that made rotationally fast with the said mechanical operating member (7), a member forming a rotor (4) fastened onto the rotor (2) of the valve and the steering shaft (3) and elastic connecting means (20) which are mounted between the said rotor (4) and stator (18) in a radial plane and anchored at their ends to the rotor (4) and to the stator (18), respectively, and exhibiting a predetermined elastic length and in that at least one of the anchoring points is displaceable to permit a variation of the said elastic length and thus of the torsional flexibility of the connection between the steering bar (3) and the mechanical operating member (7).

2. Device according to claim 1, characterized in that the elastic connecting means (20) consist of one or several helical springs, the displaceable anchoring point (26) being provided on a support (7) advantageously movable radially on the stator (18).

3. Device according to claim 1, characterized in that the elastic connecting means (20) consists of one or several bending strips mounted between the station (18) and the connecting rotor (4), the anchoring of one end of the bending strips consisting advantageously of two rollers (31) rotatably mounted on a movable holder (27, 32).

4. Device according to claim 3, characterized in that the said holder (32) is a carriage guided by a guide rail (33) advantageously in the shape of a dove tail, provided on the rotor (4).

5. Device according to one of claims 1 to 4, characterized in that the displacement of the anchoring point (26) is obtained by a drive means (23) such as an electric: motor, a hydraulic jack, an electro-magnet or the like.

6. Device according to claim 1, characterized in that the elastic means (20) is formed of one or several bending strips the anchoring point of which is variable through the medium of means such as one or several cams (35).

7. Device according to one of the preceding claims, characterized in that that end (17) of the connecting bar (15) which is opposite to the end made fast with the mechanical operating member (7) is located outside of the valve (1) and carries the stator (18) of the elastic connecting arrangement (5) .

## Patentansprüche

1. Servolenkungsvorrichtung für Kraftfahrzeuge der ein Servolenkungsventil (1) aufweisenden Gattung, welches mit einem, drehfest mit der Lenkspindel (3) verbundenen Rotor (2), einem feststehenden, ein Gehäuse (10) bildenden Körper, einer in dem Gehäuse (10) koaxial um den Rotor (2) herum angeordneten und drehfest mit einem Glied (7) zur Betätigung des Lenkmechanismus verbundenen, rohrförmigen Muffe (30) und einer elastischen Verbindungsvorrichtung zum Drehantrieb des Betätigungsgliedes (7) versehen ist, die zwischen dem letzteren und der Lenkspindel (3) zwischengeschaltet ist und eine sich entlang der Achse des Ventils (1) innerhalb des letzteren erstreckende Stange (15) aufweist, wobei diese drehfest mit einem Ende des besagten mechanischen Betätigungsgliedes (7) verbunden ist, dadurch gekennzeichnet, daß sie eine außerhalb des Servoventils auf der Seite der Lenkspindel (3) liegende elastische Verbindungsanordnung (5) umfaßt, wobei die elastische Verbindungsanordnung (5) ein einen Stator bildendes Glied (18), das an dem freien Ende (17) der Stange (15), welches dem mit dem besagten mechanischen Betätigungsglied (7) drehfest verbundenen entgegengesetzt ist, befestigt ist, ein, einen Rotor bildendes, an dem Rotor (2) des Ventils und an der Lenkspindel (3) befestigtes Glied (4) und elastische Verbindungsmittel (20) aufweist, welche zwischen den besagten Rotor (4) und Stator (18) in einer Radialebene angeordnet und mit ihren Enden jeweils am Rotor (4) und am Stator (18) verankert sind und eine vorbestimmte elastische Länge aufweisen, und daß wenigstens eine der Verankerungsstellen verschiebbar ist, um eine Veränderung der besagten elastischen Länge und somit der Drallnachgiebigkeit der Verbindung zwischen der Lenkstange (3) und dem mechanischen Betätigungsglied (7) zu gestatten.

2. Vorrichtung nach Anspruch 1, dadurch gekennzeichnet, daß die elastischen Verbindungsmittel (20) durch eine oder mehrere Wendelfedern gebildet wird, wobei die verschiebbare Verankerungsstelle (26) auf einem vorteilhaft auf dem Stator (18) radial beweglichen Halter (7) vorgesehen ist.

3. Vorrichtung nach Anspruch 1, dadurch gekennzeichnet, daß das elastische Verbindungsmittel (20) durch eine oder mehrere zwischen dem Stator (18) und dem Verbindungsrotor (4) angeordneten bzw. angeordnete Biegestreifen gebildet wird, wobei die Verankerung eines Endes der Biegestreifen vorteilhaft durch zwei drehbar an einem beweglichen Träger (27, 32) angeordneten Rollen (31) gebildet wird.

4. Vorrichtung nach Anspruch 3, dadurch gekennzeichnet, daß der besagte Träger (32) ein durch eine Führungsschiene (33) geführter, vorteilhaft schwalbenschwanzförmiger, an dem Rotor (4) vorgesehener Schlitten ist.

5. Vorrichtung nach einem der Ansprüche 1 bis 4, dadurch gekennzeichnet, daß die Verschiebung der Verankerungsstelle (26) durch ein Antriebsmittel (23) wie einen elektrischen Motor, hydraulischen Kraftzylinder, Elektro-Magnet oder dergleichen erzielt wird.

6. Vorrichtung nach Anspruch 1, dadurch gekennzeichnet, daß das elastische Mittel (20) durch einen oder mehrere Biegestreifen gebildet wird, dessen bzw. deren Verankerungsstelle über Mittel wie einen oder mehrere Nocken (35) veränderlich ist.

7. Vorrichtung nach einem der vorangehenden Ansprüche, dadurch gekennzeichnet, daß dasjenige Ende (17) der Verbindungsstange (15), welches dem mit dem mechanischen Betätigungsglied (7) fest verbundenen Ende entgegengesetzt ist, sich außerhalb des Ventils (1) befindet und den Stator (18) der elastischen Verbindungsanordnung (5) trägt.

FIG.1

Fig. 2

Fig. 3

Fig. 4

Fig. 5

Fig. 6